# EUROPEAN PATENT SPECIFICATION

(11) **EP 2 911 220 B1**
(45) Date of publication and mention of the grant of the patent: **05.12.2018**
(21) Application number: 15151989.9
(22) Date of filing: 21.01.2015
(51) Int. Cl.: H01M 2/12, H01M 2/04

(54) **Cap assembly and secondary battery including the same**
Kappenanordnung und Sekundärbatterie damit
Ensemble de capot et batterie secondaire en disposant

(30) Priority: 20.02.2014 KR 20140019690
(43) Date of publication of application: 26.08.2015
(73) Proprietor: Samsung SDI Co., Ltd., Yongin-si, Gyeonggi-do (KR)
(72) Inventor: Lee, Sang-Hyo, Gyeonggi-do (KR); Jung, Won-Il, Gyeonggi-do (KR); Kim, Yoon-Chang, Gyeonggi-do (KR)
(74) Representative: Walaski, Jan Filip

(56) References cited:
- EP-A1- 2 219 247
- WO-A1-2013/111318
- JP-A- H11 273 651
- US-A1- 2008 171 260

## Description

The present invention relates to a cap assembly and a secondary battery including the same.

In general, secondary batteries are made up of an electrode assembly having a cylindrical shape, a can having a cylindrical shape and to which the electrode assembly is combined, an electrolyte that is injected into the can and enables movement of lithium (Li) ions, and a cap assembly combined to a side of the can and preventing leakage of the electrolyte and a separation of the electrode assembly. Such secondary batteries generally have capacities of about 2000 to about 4000 mAH, and thus, are mainly mounted in a note PC, a digital camera, a camcorder, and an electric vehicle that require large power capacity.

For example, the secondary batteries are used in a shape in which a plurality of secondary batteries are connected by as many as needed in series or parallel to be assembled into a hard pack of a predetermined shape by including a protection circuit and to be combined to electronic devices for power supply. Methods of manufacturing the secondary batteries include forming an electrode assembly by stacking altogether a negative electrode plate coated with a negative electrode active material, a separator, and a positive electrode plate coated with a positive electrode active material, and winding the negative electrode plate, the separator, and the positive electrode plate in an approximately cylindrical shape.

Next, the electrode assembly is inserted into a can having a cylindrical shape. Then, an electrolyte is injected to the cylindrical can, and a cap assembly is combined to an upper portion of the cylindrical can, and thus, a Lithium-ion battery having a cylindrical shape is manufactured.

In order to prevent explosion and ignition in the secondary batteries, these secondary batteries have a structure in which a safety vent changes its shape when internal pressure increases due to over-charging and a current is broken by the change of shape of the safety vent portion. Generally, the current breaking structure, including the safety vent, is referred to as a current interrupt device (CID), and it is a component of the cap assembly.

Japanese Patent Application No. JP H11-27365, International Patent Application WO 2013/111,318, United States Patent Application No. US 2008/171260 and European Patent Application No. EP 2,219,247 disclose examples of a safety device for a secondary battery for the prevention of the rise of internal pressure due to the presence of gas.

One or more embodiments of the present invention include a cap assembly and a secondary battery including the same.

Additional aspects will be set forth in part in the description which follows and, in part, will be apparent from the description, or may be learned by practice of the presented embodiments.

The invention is defined by the appended claims.

According to one or more embodiments of the present invention, a cap assembly includes a cap-down formed such that at least a portion thereof fractures so as to form an opening when external pressure is applied thereon; a vent portion formed such that at least a portion thereof is opened when external pressure is applied thereon; and a cap-up electrically connected with the vent portion, wherein the vent portion is entirely spaced from the cap-down.

The cap-down may include a dislocation portion formed to be open when external pressure is applied thereon, and a second notch portion formed in a boundary region of the dislocation portion to define a region of the dislocation portion and in which a fracture occurs when external pressure is applied thereon.

The cap-down may further include a support portion formed in the second notch portion and supporting the dislocation portion by connecting the dislocation portion with another region of the cap-down.

A thickness of the second notch portion may be smaller than a thickness of the dislocation portion.

There may be at least one dislocation portion and at least one second notch portion; and when there are a plurality of dislocation portions and a plurality of second notch portions, the plurality of dislocation portions may be formed separate from one another, and each of the plurality of second notch portions may be formed in a boundary region of each of the plurality of dislocation portions to define a region of each of the plurality of dislocation portions.

The plurality of dislocation portions may form identical angles based on a center of the cap-down.

The plurality of dislocation portions may be formed by the same radius based on a center of the cap-down.

The dislocation portion and the second notch portion may be formed in circles.

The cap-down may include a dislocation portion formed in at least a portion of the cap-down and opened by being fractured when internal pressure of a can increases.

A thickness of the dislocation portion may be smaller than a thickness of the rest of the cap-down, in which the dislocation portion is not formed.

There may be a plurality of dislocation portions and the plurality of dislocation portions may be formed separate from one another.

The plurality of dislocation portions may form identical angles based on a center of the cap-down.

The plurality of dislocation portions may be formed by the same radius based on a center of the cap-down.

The dislocation portion may be formed in a circle.

An edge of the vent portion may extend toward the outside and be bent to cover an edge of an upper portion of the cap-up.

An opening may be formed in a center of the cap-down, and the cap assembly may further include a sub-disk covering the opening of the cap-down.

The cap assembly may further include a sub-disk integrally formed with the cap-down.

The cap assembly may further include an insulator formed between the vent portion and the cap-down to support the vent portion.

The insulator may cover an outside edge of at least one of the cap-down, the vent portion, and the cap-up.

The cap assembly may further include a cover plate formed to cover the insulator and including a fluid hole through which gas flows in a direction toward the cap-up.

An area of the fluid hole may be 10 mm2 or less.

The cap-down may include a second lower plate that is molded; a second upper plate that is molded and disposed to be spaced apart from the second lower plate; and a plurality of second bridge portions connecting the second upper plate and the second lower plate, and spaces between adjacent second bridge portions may be sealed by the insulator.

According to one or more embodiments of the present invention, a secondary battery includes: an electrode assembly; a can including an opening at one end thereof and containing the electrode assembly through the opening; and a cap assembly combined with the opening, wherein the cap assembly includes: a cap-down formed such that at least a portion thereof is opened when internal pressure of the can rises; a vent portion formed such that at least a portion thereof is opened when internal pressure of the can rises; and a cap-up electrically connected with the vent portion.

The cap-down may include a dislocation portion formed to be opened when internal pressure rises; and a second notch portion formed in a boundary region of the dislocation portion to define a region of the dislocation portion and in which a fracture occurs when internal pressure rises.

The cap-down may further include a support portion formed in the second notch portion and supporting the dislocation portion by connecting the dislocation portion with another region of the cap-down.

A thickness of the second notch portion may be smaller than a thickness of the dislocation portion.

There may be at least one dislocation portion and at least one second notch portion; and when there are a plurality of dislocation portions and a plurality of second notch portions, the plurality of dislocation portions may be formed separate from one another, and each of the plurality of second notch portions may be formed in a boundary region of each of the plurality of dislocation portions to define a region of each of the plurality of dislocation portions.

The plurality of dislocation portions may form identical angles based on a center of the cap-down.

The plurality of dislocation portions may be formed by the same radius based on a center of the cap-down.

The dislocation portion and the second notch portion may be formed in circles.

The cap-down may include a dislocation portion formed in at least a portion of the cap-down and opened by being fractured when internal pressure increases.

A thickness of the dislocation portion may be smaller than a thickness of the rest of the cap-down, in which the dislocation portion is not formed.

There may be a plurality of dislocation portions and the plurality of dislocation portions may be formed separate from one another.

The plurality of dislocation portions may form identical angles based on a center of the cap-down.

The plurality of dislocation portions may be formed by the same radius based on a center of the cap-down.

The dislocation portion may be formed in a circle.

An edge of the vent portion may extend toward the outside and be bent to cover an edge of an upper portion of the cap-up.

An opening may be formed in a center of the cap-down, and the secondary battery may further include a sub-disk covering the opening of the cap-down.

The secondary battery may further include a sub-disk integrally formed with the cap-down.

The secondary battery may further include an insulator formed between the vent portion and the cap-down to support the vent portion.

The insulator may cover an outside edge of at least one of the cap-down, the vent portion, and the cap-up.

The secondary battery may further include a cover plate formed to cover the insulator and including a fluid hole through which gas flows in a direction toward the cap-up.

An area of the fluid hole may be 10 mm2 or less.

The cap-down may include a second lower plate that is molded, a second upper plate that is molded and disposed to be spaced apart from the second lower plate, and a plurality of second bridge portions connecting the second upper plate and the second lower plate, and spaces between adjacent second bridge portions may be sealed by the insulator.

These and/or other aspects will become apparent and more readily appreciated from the following description of the embodiments, taken in conjunction with the accompanying drawings in which:
FIG. 1 is a perspective view of a secondary battery according to an embodiment of the present invention;
FIG. 2 is an exploded perspective view of the secondary battery of FIG. 1;
FIG. 3 is a cross-sectional view taken along line III-III of FIG. 1;
FIG. 4 is a plan view of an example of a current breaking portion of FIG. 3;
FIG. 5 is a cross-sectional view taken along line V-V of FIG. 4;
FIG. 6 is a plan view of another example of a current breaking portion of FIG. 3;
FIG. 7 is a cross-sectional view taken along line VII-VII of FIG. 6;
FIG. 8 is a cross-sectional view of a portion of a secondary battery according to another embodiment of the present invention; and
FIG. 9 is a cross-sectional view of a portion of a secondary battery according to another embodiment of the present invention.

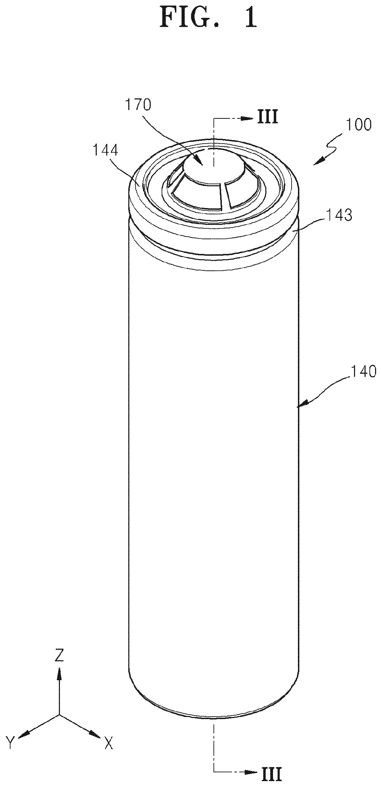

Referring to FIGS. 1 to 3, the secondary battery 100 includes an electrode assembly 110, a can 140 containing the electrode assembly 110, and a cap assembly 170 mounted to the can 140.

The electrode assembly 110 may include a first electrode plate 111, a second electrode plate 112, and a separator 113 between the first electrode plate 111 and the second electrode plate 112. For example, the electrode assembly 110 may be manufactured by sequentially stacking the first electrode plate 111, the separator 113, and the second electrode plate 112 and winding the first electrode plate 111, the separator 113, and the second electrode plate 112 in a jelly-roll shape.

Here, the electrode assembly 110 may be formed to correspond to a shape of the can 140. For example, when the can 140 has an oval shape, the electrode assembly 110 may have an oval jelly-roll shape. However, hereinafter, a case in which the can 140 and the electrode assembly 110 are both circular will be described for convenience of explanation.

The first electrode plate 111 may be a positive electrode film or a negative electrode film. When the first electrode plate 111 is a positive electrode film, the second electrode plate 112 may be a negative electrode film. On the contrary, when the first electrode plate 111 is a negative electrode film, the second electrode plate 112 may be a positive electrode film. That is, the first electrode plate 111 and the second electrode plate 112 are formed to have different electrical polarities, and are not limited to specific electrical polarities. However, hereinafter, for convenience of explanation, a description will be provided of a case in which the first electrode plate 111 is a positive electrode film, and the second electrode plate 112 is a negative electrode film.

The first electrode plate 111 may include a first active material portion coated with a first active material and a first non-coated portion that is not coated with the first active material. The first active material portion may be formed, for example, by coating a portion of at least one surface of an aluminum (Al) plate with the first active material, and, the rest of the Al plate, which is not coated with the first active material, may be the first non-coated portion. The first active material may be a positive electrode active material, such as lithium (Li)-containing transition metal oxide, such as LiCoO₂, LiNiO₂, LiMnO₂, and LiMnO₄, or a Li chalcogenide compound.

The second electrode plate 112 may include a second active material portion coated with a second active material and a second non-coated portion that is not coated with the second active material. The second active material portion may be formed, for example, by coating a portion of at least one surface of a copper (Cu) plate with the second active material, and, the rest of the Cu plate, which is not coated with the second active material, may be the second non-coated portion. The second active material may be for example a negative electrode active material. In particular, the second active material may be a carbon material, such as crystalline carbon, amorphous carbon, a carbon compound, and a carbon fiber, a Li metal, or a Li alloy.

The separator 113 may be a porous polymer film, such as a polyethylene (PE) film and a polypropylene (PP) film. The separator 113 may further include ceramic particles and may be formed of a solid polyelectrolyte. The separator 113 may be formed as an independent film, or may be formed as a nonconductive porous layer on the first electrode plate 111 or the second electrode plate 112.

A first electrode tab 114 is electrically connected with the first electrode plate 111, and a second electrode tab 115 is electrically connected with the second electrode plate 112. An end of the first electrode tab 114 may be connected with the first non-coated portion by welding, etc., and the other end of the first electrode tab 114 may be electrically connected with a current breaking portion 150. Also, an end of the second electrode tab 115 may be connected with the second non-coated portion by welding, etc., and the other end of the second electrode tab 115 may be welded to a bottom surface of the can 140.

The can 140 includes an opening at one side thereof, and the electrode assembly 110 may be contained in the can 140 through the opening. The can 140 may have for example a cylindrical shape. The can 140 may be formed of a conductive material such as Al, and thus, may protect the electrode assembly 110 from external shock and function as a heat-insulating board that releases heat from charge and discharge operations of the electrode assembly 110 to the outside. In addition, since the bottom surface of the can 140 is electrically connected with the second electrode tab 115 by welding, etc., the can 140 may function as a second electrode.

A third notch portion 146 may be formed in the bottom surface of the can 140. When internal pressure of the can 140 exceeds a predetermined value, the third notch portion 146 may change its shape or may break to emit gas generated inside the can 140 to the outside.

A first insulating plate 120 and a second insulating plate 130 may be respectively disposed on an end and the other end of the electrode assembly 110, inside the can 140. The first insulating plate 120 may be disposed between an upper surface of the electrode assembly 110 and the cap assembly 170, thereby insulating the electrode assembly 110 from the cap assembly 170. The second insulating plate 130 may be disposed between the electrode assembly 110 and the bottom surface of the can 140, thereby insulating the electrode assembly 110 from the can 140.

The cap assembly 170 is combined with the can 140 and seals the opening of the can 140. In detail, a beading portion 142 dented toward the inside of the can 140 is formed on the can 140. The cap assembly 170 is inserted inside the can 140 through the beading portion 142, and a portion of the can 140 is bent toward the inside thereof above the cap assembly 170 to form a crimping portion 144. Thus, the cap assembly 170 is combined with the can 140. The beading portion 142 and the crimping portion 144 solidly fix and support the cap assembly 170 to the can 140, thereby preventing a dislocation of the cap assembly 170 and leakage of an electrolyte to the outside.

The cap assembly 170 may include a gasket 141, the current breaking portion 150, and a cap-up 160.

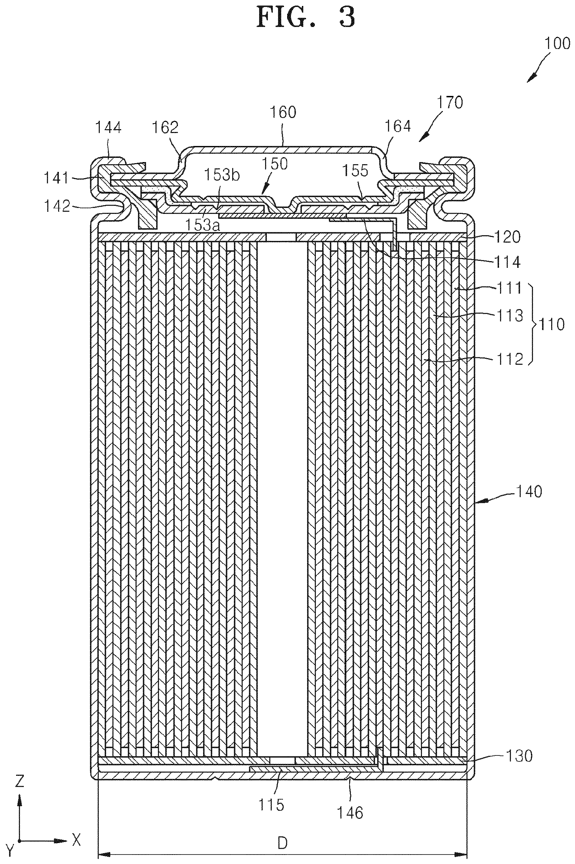

The gasket 141 is disposed at one side of the can 140 in an approximately ring shape. The gasket 141 fixes the current breaking portion 150 and the cap-up 160 according to a shape of the crimping portion 144, and insulates the current breaking portion 150 and the cap-up 160 from the can 140. It is illustrated in FIG. 3 that the cap-up 160 is disposed on the current breaking portion 150, and the cap-up 160 and the current breaking portion 150 are fixed by the gasket 141. However, embodiments of the present invention are not limited thereto. That is, an edge of the current breaking portion 150 may extend to the outside and be bent so as to cover an edge of an upper portion of the cap-up 160 so that the current breaking portion 150 and the cap-up 160 may be combined with each other. In this state, the current breaking portion 150 and the cap-up 160 may be further fixed by the gasket 141. For example, an edge of a vent portion 154, which will be described later, may extend to the outside and be bent to cover the edge of the upper portion of the cap-up 160 so that the current breaking portion 150 and the cap-up 160 may be combined to each other.

The current breaking portion 150 may break a current when pressure inside the can 140 rises and may emit gas to the outside when internal pressure of the can 140 exceeds a predetermined value by including a first notch portion 155. Also, the current breaking portion 150, 250 includes a dislocation portion 153a and 253 which is opened or fractured when internal pressure occurs to provide a passage through which gas may flow in a direction toward the cap-up 160. Here, the dislocation portion 153a and 253 may enable gas to evenly diffuse in up and down directions inside the can 140 so that the first notch portion 155 and the third notch portion 146 are fractured together.

The cap-up 160 may function as a first electrode by being connected to the current breaking portion 150 electrically connected to the first electrode tab 114. The cap-up 160 includes a plurality of through-holes 164 for ease of gas emission, and first bridge portions 162 may be formed between the plurality of through-holes 164. Here, the cap-up 160 may include a first upper plate 161 and a first lower plate 163 connected to the first bridge portion 162. In particular, the first upper plate 161 and the first lower plate 163 may be disposed to be spaced apart from each other. For example, the first upper plate 161 and the first lower plate 163 may be disposed above and below with respect to each other.

Hereinafter, the current breaking portion 150 will be described in detail.

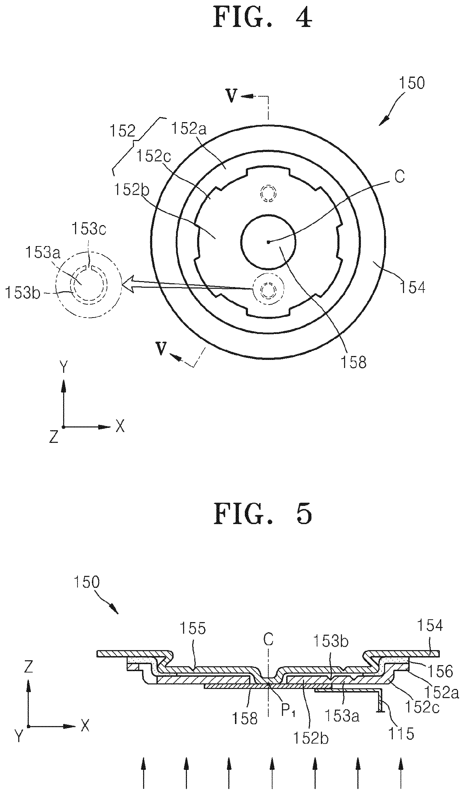

FIG. 4 is a plan view of an example of the current breaking portion 150 of FIG. 3. FIG. 5 is a cross-sectional view taken along line V-V of FIG. 4.

Referring to FIGS. 4 and 5, the current breaking portion 150 may, for example, include a cap-down 152, the vent portion 154, an insulator 156, and a sub-disk 158.

The cap-down 152 includes an opening in the center thereof, and the vent portion 154 is disposed on one surface of the cap-down 152. The insulator 156 is disposed in an edge between the cap-down 152 and the vent portion 154, thereby insulating the cap-down 152 from the vent portion 154. In addition, a gap may be formed between the cap-down 152 and the vent portion 154 by the insulator 156.

The cap-down 152 may include a second upper plate 152a including an opening in the center thereof, a second lower plate 152b disposed separate from the second upper plate 152a, and a plurality of second bridge portions 152c connecting the second upper plate 152a and the second lower plate 152b. Here, the second lower plate 152b and the second upper plate 152a may be formed by molding, and may be disposed on different planes. Also, spaces between adjacent second bridge portions 152c may be sealed by the insulator 156.

The vent portion 154 may include the first notch portion 155. The first notch portion 155 may have a groove shape to be relatively thin, and may change its shape or break to emit gas in a can (not shown) to the outside when internal pressure of the can exceeds a predetermined value.

The cap-down 152 may include the dislocation portion 153a that is opened when internal pressure of the can rises, and a second notch portion 153b formed at a boundary of the dislocation portion 153a. Here, the dislocation portion 153a and the second notch portion 153b may be formed in at least one of two surfaces of the cap-down 152. For example, the dislocation portion 153a and the second notch portion 153b may be formed in one surface of the cap-down 152, to which the sub-disk 158 is combined. Also, the dislocation portion 153a and the second notch portion 153b may be formed in the other surface of the cap-down 152, which is toward the vent portion 154. In addition, the dislocation portion 153a and the second notch portion 153b may be respectively formed in the surface and the other surface of the cap-down 152. However, hereinafter, descriptions will be provided in detail focusing on the case in which the dislocation portion 153a and the second notch portion 153b are formed in the other surface of the cap-down 152, for convenience of explanation.

The second notch portion 153b may be formed in the boundary region of the dislocation portion 153a to define a region of the dislocation portion 153a.

Also, the cap-down 152 may include a support portion 153c formed on the second notch portion 153b and supporting the dislocation portion 153a by connecting the dislocation portion 153a with another region of the cap-down 152. In particular, the support portion 153c supports the dislocation portion 153a when the second notch portion 153b is fractured, and thus, may prevent the dislocation portion 153a from being broken away to damage or collide with other components.

The second notch portion 153b is formed to have a different thickness from the dislocation portion 153a. For example, the second notch portion 153b may be formed to have a groove shape, etc., to have a relatively smaller thickness than the dislocation portion 153a. In particular, the second notch portion 153b may fracture when internal pressure of the can exceeds a predetermined value and may separate the dislocation portion 153a from the cap-down 152.

Also, the second notch portion 153b and the dislocation portion 153a may be formed to have various shapes. For example, the dislocation portion 153a and the second notch portion 153b may be formed in a circle, a quadrangle, a triangle, or a polygon. Hereinafter, descriptions will be provided in detail focusing on the case in which the dislocation portion 153a and the second notch portion 153b are formed in circles. Particularly, the dislocation portion 153a is formed in a circle, and the second notch portion 153b is formed as a circle-ring shape, thereby forming the boundary region of the dislocation portion 153a as described above.

A plurality of dislocation portions 153a and a plurality of second notch portions 153b may be provided. For example, the plurality of dislocation portions 153a may be disposed separate from one another. Here, each of the plurality of second notch portions 153b may be formed in the boundary region of each of the plurality of dislocation portions 153a to define a region of each of the plurality of dislocation portions 153a.

Each of the plurality of dislocation portions 153a may form an identical angle based on the center C of the cap-down 152. For example, when there are two dislocation portions 153a, the two dislocation portions 153a may be disposed to face each other with the center C of the cap-down 152 as the center. Also, when there are three dislocation portions 153a, the three dislocation portions 153a may be disposed such that angles between the three adjacent dislocation portions are 120°. Here, the number of dislocation portions 153a is not limited thereto. However, hereinafter, a more detailed description will be provided focusing on the case in which the number of dislocation portions 153a is two, for convenience of explanation.

The plurality of dislocation portions 153a may be disposed at the same radius based on the center C of the cap-down 152. In particular, the plurality of dislocation portions 153a may be disposed in a radial form based on the center C of the cap-down 152. In detail, a distance between the center of each of the dislocation portions 153a and the center C of the cap-down 152 may be the same.

The sub-disk 158 is disposed on the other surface of the cap-down 152 to cover the opening thereof. A surface of the sub-disk 158 may be combined to the first electrode tab 114, and the other surface of the sub-disk 158 may be electrically connected to the vent portion 154 by ultrasonic welding, etc., in the opening of the cap-down 152.

Hereinafter, an operation of the current breaking portion 150 will be described in detail.

A secondary battery (not shown) may be overheated by external radiant heat, rapid heating, over-charging, etc., and during the heating of the secondary battery, gas may be generated by cyclohexylbenzene (CHB) and biphenyl (BP), which are electrolyte additives. As a result, internal pressure of a can rapidly increases, and the secondary battery may explode.

As illustrated in FIG. 5, when gas is generated inside the can, a temperature of the gas rises to 600°C or higher, and the insulator 156 between the second bridge portions 152c may be fused by the gas.

When the insulator 156 is fused, an exposed space is formed between an end of the cap-down 152 and an end of the vent portion 154, and between adjacent second bridge portions 152c and the gas may flow between the cap-down 152 and the vent portion 154 through the space. Here, a pressure in a gap between the cap-down 152 and the vent portion 154 increases, and as a result, a shape of the vent portion 154 changes so that a combining portion P1 between the cap-down 152 and the sub-disk 158 is dislocated and a current may be broken.

Also, when the gas continuously flows between the cap-down 152 and the vent portion 154, and the pressure in the gap between the cap-down 152 and the vent portion 154 further increases, the first notch portion 155 is fractured so that the gas inside the can may be released to the outside.

As described above, when a predetermined time lapses after the first notch portion 155 is fractured, an explosion may occur inside the can. Here, the dislocation portion 153 may be fractured later than the first notch portion 155. Also, the third notch portion may be fractured together with the dislocation portion 153.

In the case above, when the third notch portion or the dislocation portion 153a is not fractured, a side surface of the can may be fractured. Here, when the side surface of the can is fractured, it may transmit heat to neighboring cans or damage external devices so that the stability of the secondary battery may be deteriorated.

As shown above, a cap assembly (not shown) and the secondary battery may open the first notch portion 155, the dislocation portion 153a, and the third notch portion to prevent a temperature increase inside the can.

Thus, the cap assembly and the secondary battery may smoothly release combustion gas and materials in the can to the outside during the ignition inside the can so that the stability of the secondary battery may be obtained.

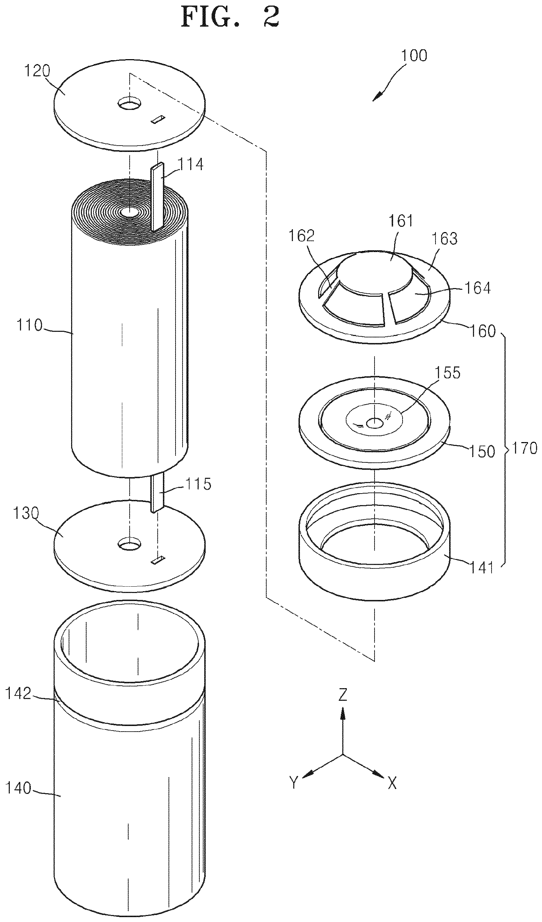

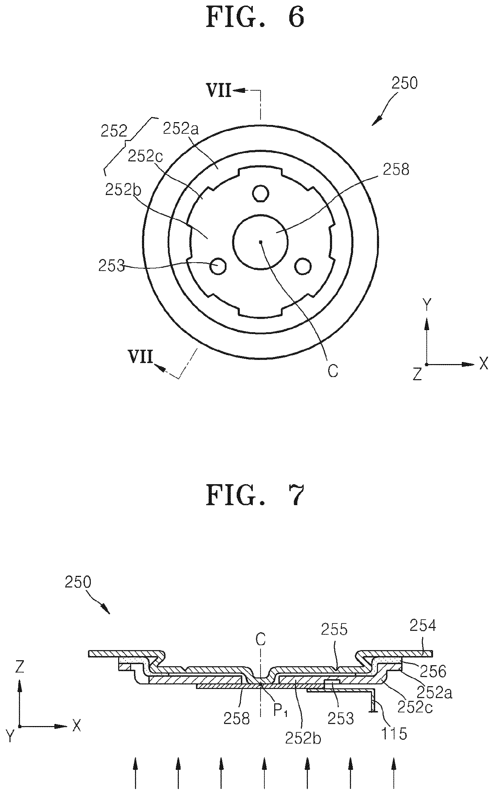

FIG. 6 is a plan view of another example of the current breaking portion 250 of FIG. 2. FIG. 7 is a cross-sectional view taken along line VII-VII of FIG. 6.

Referring to FIGS. 6 and 7, a current breaking portion 250 may include a cap-down 252, a vent portion 254, an insulator 256, and a sub-disk 258, according to another embodiment of the present invention. Here, the vent portion 254, the insulator 256, and the sub-disk 258 are substantially the same as the vent portion 154, the insulator 156, and the sub-disk 158 described above, respectively.

The cap-down 252 may include an opening in the center thereof, and a dislocation portion 253 formed around the center thereof. In particular, the cap-down 252 may include a second upper plate 252a, a second lower plate 252b, and a plurality of second bridge portions 252c, as described above. Here, the dislocation portion 253 may be formed in the second lower plate 252b.

The dislocation portion 253 may be formed in at least one surface of two surfaces of the cap-down 252. For example, the dislocation portion 253 may be formed only in a surface of the cap-down 252 to which the sub-disk 258 is attached, or may be formed only in the other surface of the cap-down 252, which faces the vent portion 254. Also, the dislocation portion 253 may be formed in the surface and the other surface of the cap-down 252. However, a more detailed description will be provided focusing on the case in which the dislocation portion 253 is formed in the surface of the cap-down 252, for convenience of explanation.

The dislocation portion 253 may be formed to fracture when a predetermined pressure is applied thereon. In detail, a thickness of the dislocation portion 253 may be different from a thickness of other portions of the cap-down 252, in which the dislocation portion 253 is not formed. For example, the thickness of the dislocation portion 253 may be smaller than the thickness of other portions of the cap-down 252, in which the dislocation portion 253 is not formed.

Here, the dislocation portion 253 having such a thickness may be fractured and opened when internal pressure of a can (not shown) exceeds a predetermined value. In detail, the dislocation portion 253 may be formed such that the dislocation portion 253 is opened after the first notch portion 255 is opened.

The dislocation portion 253 may be formed to have various shapes. For example, the dislocation portion 253 may be formed to be circular. Also, the dislocation portion 253 may be formed to be quadrangular. Here, the shape of the dislocation portion 253 is not limited thereto. However, hereinafter, a more detailed description will be provided focusing on the case in which the shape of the dislocation portion 253 is circular, for convenience of explanation.

There may be a plurality of dislocation portions 253. Here, the plurality of dislocation portions 253 may be disposed to be separate from one another. Also, the dislocation portions 253 may be disposed on the same radius and may form identical angles based on the center C of the cap-down 252. Here, locations and dispositions of the dislocation portions 253 are substantially the same as the dislocation portions 153a described above, and thus, detailed descriptions thereof will not omitted. In addition, hereinafter, a more detailed description will be provided focusing on a case in which there are three dislocation portions 253, for convenience of explanation.

With regard to an operation of the current breaking portion 250 formed as described above, when gas is generated inside the can, the gas may move to an upper and lower portions of the can. Here, the gas moving to the upper portion of the can fuses the insulator 256 exposed between the adjacent second bridge portions 252c, and the gas may flow to an exposed space is formed between an end of the cap-down 152 and an end of the vent portion 154, and between adjacent second bridge portions 152c.

The gas may increase pressure in a gap between the cap-down 252 and the vent portion 254 and may break away the vent portion 254 from the sub-disk 258 by changing a shape of the vent portion 254 so that a current may be broken.

Also, when the gas is continuously generated, the gas flows between the cap-down 252 and the vent portion 254, thereby increasing the pressure in the gap between the cap-down 252 and the vent portion 254 so that the first notch portion 255 is fractured and the gas inside the can may be released to the outside. Here, along with the first notch portion 255, the dislocation portion 253 and a third notch portion (not shown) should be fractured together. Particularly, when the dislocation portion 253 and the third notch portion are not fractured, a side surface of the can is fractured as described above and the stability of a secondary battery (not shown) may be deteriorated.

Here, the dislocation portion 253 may be fractured later than the first notch portion 255. Also, the third notch portion may be fractured together with the dislocation portion 253.

When the dislocation portion 253 is formed as described above, the first notch portion 255, the dislocation portion 253, and the third notch portion are fractured so that combustion gas and materials in the can may be smoothly released to the outside.

Thus, a cap assembly (not shown) and the secondary battery may rapidly and smoothly release heat and materials in the can during the ignition in the can, and thus, the stability of the secondary battery may be obtained.

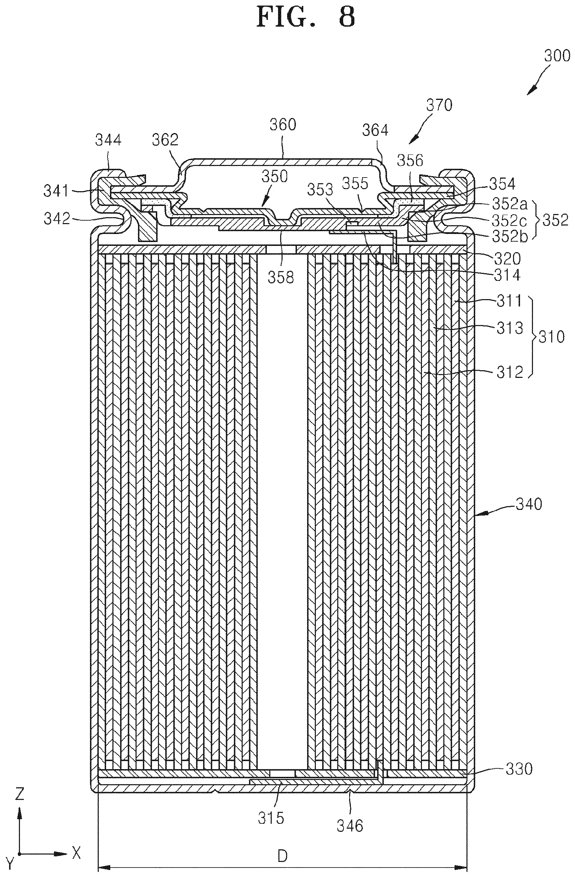

FIG. 8 is a cross-sectional view of a portion of a secondary battery 300 according to another embodiment of the present invention.

Referring to FIG. 8, the secondary battery 300 may include an electrode assembly 310, a can 340 containing the electrode assembly 310, and a cap assembly 370 combined with the can 340. Also, the secondary battery 300 may include a first insulating plate 320 and a second insulating plate 330, inserted in the can 340. Here, the first insulating plate 320 and the second insulating plate 330 are substantially the same as the first insulating plate 120 and the second insulating plate 130, respectively.

The can 340 may include a beading portion 342 and a crimping portion 344. Here, the beading portion 342 and the crimping portion 344 are substantially the same as the beading portion 142 and the crimping portion 144 described above, respectively.

The electrode assembly 310 may include a first electrode plate 311, a second electrode plate 312, and a separator 313. Here, the first electrode plate 311, the second electrode plate 312, and the separator 313 are substantially the same as the first electrode plate 111, the second electrode plate 112, and the separator 113 described above, respectively.

A first electrode tab 314 may be electrically connected with the first electrode plate 311, and a second electrode tab 315 may be electrically connected with the second electrode plate 312. Here, the second electrode tab 315 may be attached to a bottom surface of the can 340.

The cap assembly 370 may include a gasket 341, a current breaking portion 350, and a cap-up 360. Here, the gasket 341 and the cap-up 360 are substantially the same as the gasket 141 and the cap-up 160 described above, respectively.

The current breaking portion 350 may include a vent portion 354 in which a first notch portion 355 is formed, a cap-down 352 in which a dislocation portion 353 is formed, and a sub-disk 358 to which the first electrode tab 314 is attached. Also, the current breaking portion 350 may include an insulator 356 formed to be disposed between the vent portion 354 and the cap-down 352. Here, the first notch portion 355, the vent portion 354, the dislocation portion 353, the cap-down 352, and the insulator 356 are substantially the same as the first notch portion 255, the vent portion 254, the dislocation portion 253, the cap-down 252, and the insulator 256 described above, respectively.

The sub-disk 358 may be formed under the cap-down 352. Here, the sub-disk 358 may be integrally formed with the cap-down 352. In detail, the sub-disk 358 may extend from the cap-down 352 to close a center portion of the cap-down 352 that is open. Here, the first electrode tab 314 may be attached and fixed to the sub-disk 358.

With regard to an operation of the current breaking portion 350, the current breaking portion 350 may operate in substantially the same manner as described above. For example, when the inside of the can 340 is overheated or over-currents are formed in the electrode assembly 310, gas may be generated inside the can 440. Here, the insulator 356 may be fused and removed by a temperature of the gas.

The gas may move through spaces between adjacent second bridge portions 352c in which the insulator 356 is removed, or may move through a space between an end of a second upper plate 352a and an end of the vent portion 354.

The gas moving as described above may increase pressure in a gap between the cap-down 352 and the vent portion 354, and may separate the vent portion 354 from the sub-disk 358 of the cap-down 352 to suspend the power supply. Later, if the pressure in the gap between cap-down 352 and the vent portion 354 continues to increase, the gas may fracture the first notch portion 355 of the vent portion 354 to open a portion of the vent portion 354.

Also, when the pressure inside the can 340 continues to increase, the dislocation portion 353 is fractured to be opened after the first notch portion 355 is fractured so that the gas and heat inside the can 340 may be released to the outside. Here, a third notch portion 346 may be fractured together with the dislocation portion 353 to open a lower portion of the can 340.

Accordingly, the cap assembly 370 and the secondary battery 300 fracture the first notch portion 355, the dislocation portion 353, and the third notch portion 346 to release the gas, heat, and an electrolyte inside the can 340 to the outside, when the internal pressure of the can 340 increases, and thus, the stability of the secondary battery 300 may be obtained.

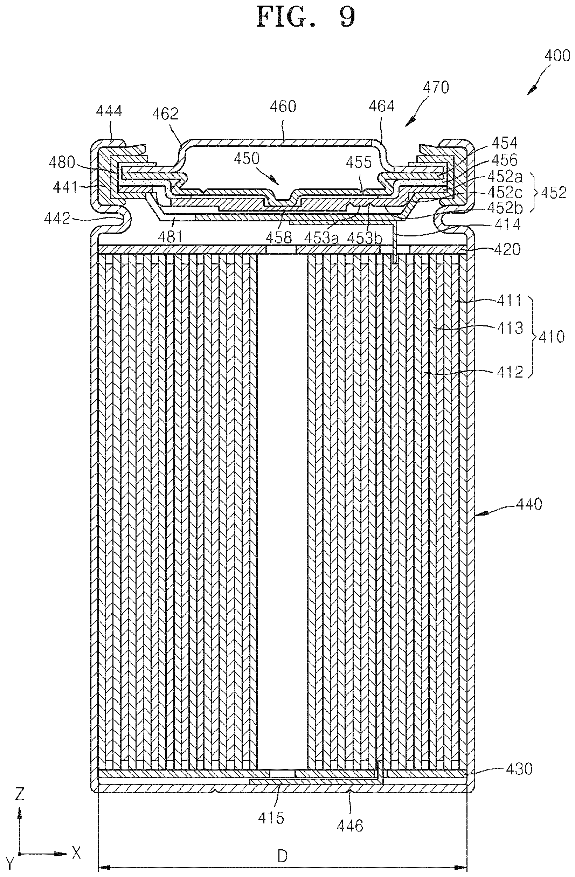

FIG. 9 is a cross-sectional view of a portion of a secondary battery 400 according to another embodiment of the present invention.

Referring to FIG. 9, the secondary battery 400 may include an electrode assembly 410, a can 440 containing the electrode assembly 410, and a cap assembly 470 combined with the can 440. Also, the secondary battery 400 may include a first insulating plate 420 and a second insulating plate 430 inserted in the can 440. Here, the first insulating plate 420 and the second insulating plate 430 are substantially the same as the first insulating plate 120 and the second insulating plate 130 described above, respectively.

The can 440 may include a beading portion 442 and a crimping portion 444. The beading portion 442 and the crimping portion 444 are substantially the same as the beading portion 142 and the crimping portion 144 described above, respectively.

The electrode assembly 410 may include a first electrode plate 411, a second electrode plate 412, and a separator 413. Here, the first electrode plate 411, the second electrode plate 412, and the separator 413 are substantially the same as the first electrode plate 111, the second electrode plate 112, and the separator 113 described above, respectively.

A first electrode tab 414 may be electrically connected with the first electrode plate 411, and a second electrode tab 415 may be electrically connected with the second electrode plate 412. Here, the second electrode tab 415 may be attached to a bottom surface of the can 440.

The cap assembly 470 may include a gasket 441, a current breaking portion 450, a cap-up 460, and a cover plate 480. Here, the gasket 441 and the cap-up 460 are substantially the same as the gasket 141 and the cap-up 160 described above, respectively.

The current breaking portion 450 may include a vent portion 454 in which a first notch portion 455 is formed. Also, the current breaking portion 450 may include a cap-down 452 in which a second notch portion 453b and a dislocation portion 453a are formed, and an insulator 456 formed between the cap-down 452 and the vent portion 454. The current breaking portion 450 may include a sub-disk 458 connected to the cap-down 452. Here, the dislocation portion 453a may be connected to another portion of the cap-down 452 by a support portion (not shown) formed on the second notch portion 453b. Also, the sub-disk 458 may be integrally formed with the cap-down 452 or may be separately formed from the cap-down 452 and attached to the cap-down 452. Hereinafter, a detailed description will be provided focusing on the case in which the sub-disk 458 is integrally formed with the cap-down 452, for convenience of explanation.

The first notch portion 455 and the second notch portion 453b may be formed to have a ring-shape. Here, a diameter of the first notch portion 455 may be larger than a diameter of the second notch portion 453b.

The cap-down 452 may include a first upper plate 452a, a first lower plate 452b, and a first bridge portion 452c. Here, the first bridge portion 452c may connect the first upper plate 452a and the first lower plate 452b, and spaces may be formed between a plurality of adjacent first bridge portions 452c. In particular, gas may flow between the adjacent first bridge portions 452c.

The insulator 456 may be disposed between the vent portion 454 and the cap-down 452 and may separate at least a portion of the cap-down 452 from the vent portion 454. Here, the insulator 456 may be formed to cover an outside edge of at least one of the vent portion 454, the cap-down 452, and the cap-up 460. In particular, the insulator 456 may be formed to completely seal the space between the vent portion 454 and the cap-down 452. However, hereinafter, a detailed description will be provided focusing on the case in which the insulator 456 is formed to cover the outside edge of the vent portion 454, the cap-down 452, and the cap-up 460, for convenience of explanation.

The cover plate 480 may be formed to cover the insulator 456. Here, at least one fluid hole 481 may be formed in the cover plate 480. In particular, gas generated in the can 440 may flow in a direction toward the cap-up 460 from the inside of the can 440 through the fluid hole 481.

An area of the fluid hole 481 may be 10 mm2 or less. Here, when the area of the fluid hole 481 is larger than 10 mm², the gas inside the can 440 may move too rapidly, or heat inside the can 440 may be excessively transmitted to the cap assembly 470 so that the cap assembly 470 may be damaged or separated from the can 440.

When the inside of the can 440 of the secondary battery 440, formed as described above, is heated, gas may be generated inside the can 440 and the gas may pass through the fluid hole 481 and fuse the insulator 456 so that the gas may be injected to a space between the vent portion 454 and the cap-down 452.

Here, the vent portion 454 and at least a portion of the cap-down 452 may maintain a state in which the vent portion 454 and the at least a portion of the cap-down 452 contact each other, and later may be separated from each other. In particular, since the cover plate 480 and the cap-down 452 contact each other, the first electrode tab 414 connected to the cover plate 480 may be short circuited.

When internal pressure of the can 440 continues to rise after the above process, pressure between the vent portion 454 and the cap-down 452 may also increase. Here, when the pressure between the vent portion 454 and the cap-down 452 reaches pressure by which the first notch portion 455 is fractured, the first notch portion 455 is fractured so that at least a portion of the vent portion 454 may be open.

Also, when the internal pressure of the can 440 continues to rise by explosion or the like, and pressure applied to the second notch portion 453b is larger than pressure by which the second notch portion 453b is fractured, the second notch portion 453b is fractured so that the dislocation portion 453a may be open.

When the second notch portion 453b is fractured, the third notch portion 446 may be also fractured. Here, the gas, heat, and an electrolyte of the can 440 may be released in up and down directions of the can 440.

Thus, the cap assembly 470 and the secondary battery 400 may release the gas and heat in up and down directions of the can 440 when the gas and heat are generated due to the heating or explosion inside the can 440. Accordingly, the can 440 may be prevented from having a temperature inside thereof increased and a fractured side surface thereof.

Particularly, the cap assembly 470 and the secondary battery 400 smoothly release the gas, heat, and electrolyte inside the can 440 to the outside, and thus, the stability of the secondary battery 400 may be obtained.

It should be understood that the exemplary embodiments described therein should be considered in a descriptive sense only and not for purposes of limitation. Descriptions of features or aspects within each embodiment should typically be considered as available for other similar features or aspects in other embodiments.

While embodiments of the present invention have been described with reference to the figures, it will be understood by those of ordinary skill in the art that various changes in form and details may be made therein without departing from the scope of the present invention as defined by the following claims.

## Claims

1. A cap assembly comprising:
a cap-down (152, 252, 352, 452) arranged such that at least a portion thereof fractures so as to form an opening when external pressure is applied thereon;
a vent portion (154, 254, 354, 454) arranged such that at least a portion thereof is opened when external pressure is applied thereon; and
a cap-up (160, 360, 460) electrically connected with the vent portion,
wherein the vent portion is entirely spaced from the cap-down.

2. The cap assembly of claim 1, wherein the cap-down (152, 452) comprises:
a dislocation portion (153a, 453a) arranged to open when external pressure is applied thereon; and
a notch portion (153b, 453b) in a boundary region of the dislocation portion defining the dislocation portion and in which a fracture is arranged to occur when external pressure is applied thereon.

3. The cap assembly of claim 2, wherein the cap-down (152) further comprises a support portion (153c) formed in the notch portion and supporting the dislocation portion (153a) by connecting the dislocation portion with another region of the cap-down.

4. The cap assembly of claim 2 or 3, wherein a thickness of the notch portion (153b, 453b) is less than a thickness of the dislocation portion.

5. The cap assembly of claim 2, wherein there is at least one dislocation portion (153a, 453a) and at least one notch portion (153b, 453b); and
when there are a plurality of dislocation portions and a plurality of notch portions, the plurality of dislocation portions are formed separate from one another, and each of the plurality of notch portions is formed in a boundary region of each of the plurality of dislocation portions to define a region of each of the plurality of dislocation portions.

6. The cap assembly of claim 2, wherein the dislocation portion (153a, 453a) and the notch portion (153b, 453b) are circular.

7. The cap assembly of claim 1, wherein the cap-down (252, 352) comprises a dislocation portion (253, 353) formed in at least a portion of the cap-down and opened by being fractured when the external pressure increases.

8. The cap assembly of claim 7, wherein a thickness of the dislocation portion (253, 353) is less than a thickness of the rest of the cap-down, (152, 252) in which the dislocation portion is not formed.

9. The cap assembly of claim 7 or 8, wherein there are a plurality of dislocation portions (253, 353) and the plurality of dislocation portions are formed separate from one another.

10. The cap assembly of claim 5 or 9, wherein the plurality of dislocation portions (153a, 253) form identical angles based on a center of the cap-down (152, 252); or wherein the plurality of dislocation portions are formed by the same radius based on a center of the cap-down.

11. The cap assembly of claim 7, wherein the dislocation portion (253, 353) is formed in a circle.

12. The cap assembly of any one of the preceding claims, wherein an edge of the vent portion (154) extends toward the outside and is bent to cover an edge of an upper portion of the cap-up (160) and/or wherein an opening is formed in a center of the cap-down, and the cap assembly further comprises a sub-disk (158) covering the opening of the cap-down (152) and/or further comprising a sub-disk (358) integrally formed with the cap-down (352).

13. The cap assembly of any of the preceding claims, further comprising an insulator (156, 256, 356, 456) formed between the vent portion (154, 254, 354, 454) and the cap-down (152, 252, 352, 452) to support the vent portion.

14. The cap assembly of claim 13 wherein the insulator (456) covers an outside edge of at least one of the cap-down (452), the vent portion (454), and the cap-up (460), and/or the cap assembly further comprises a cover plate (480) formed to cover the insulator (456) and comprising a fluid hole (481) through which gas flows in a direction toward the cap-up.

15. The cap assembly of claim 14 wherein, if the cap assembly comprises the cover plate, an area of the fluid hole (481) of the cover plate is 10 mm² or less.

16. The cap assembly of any one of claims 13 to 15, wherein the cap-down comprises:
a lower plate (152b, 252b, 352b, 452b);
an upper plate (152a, 252a, 352a, 452a), disposed to be spaced apart from the lower plate; and
a plurality of bridge portions (152c, 252c, 352c, 452c) connecting the upper plate and the lower plate,
and wherein spaces between adjacent bridge portions are sealed by the insulator (156, 256, 356, 456).

17. A secondary battery (300, 400) comprising:
an electrode assembly (310, 410);
a can (340, 440) containing the electrode assembly; and
a cap assembly (370, 470) according to any one of the preceding claims, wherein the external pressure is provided by internal pressure in the can.

## Patentansprüche

1. Kappenanordnung, umfassend:
eine Kappenunterseite (152, 252, 352, 452), die so angeordnet ist, dass mindestens ein Abschnitt davon bricht, um eine Öffnung zu bilden, wenn externer Druck darauf ausgeübt wird;
einen Entlüftungsabschnitt (154, 254, 354, 454), der so angeordnet ist, dass mindestens ein Abschnitt davon geöffnet wird, wenn externer Druck darauf ausgeübt wird; und
eine Kappenoberseite (160, 360, 460), die elektrisch mit dem Entlüftungsabschnitt verbunden ist,
wobei der Entlüftungsabschnitt gänzlich von der Kappenunterseite beabstandet ist.

2. Kappenanordnung nach Anspruch 1, wobei die Kappenunterseite (152, 452) umfasst:
einen Dislokationsabschnitt (153a, 453a), der angeordnet ist, um sich zu öffnen, wenn externer Druck darauf ausgeübt wird; und
einen Kerbenabschnitt (153b, 453b) in einem Grenzbereich des Dislokationsabschnitts, der den Dislokationsabschnitt definiert und in dem das Auftreten eines Bruchs vorgesehen ist, wenn externer Druck darauf ausgeübt wird.

3. Kappenanordnung nach Anspruch 2, wobei die Kappenunterseite (152) ferner einen Stützabschnitt (153c) umfasst, der in dem Kerbenabschnitt gebildet ist und den Dislokationsabschnitt (153a) stützt, indem der Dislokationsabschnitt mit einem anderen Bereich der Kappenunterseite verbunden ist.

4. Kappenanordnung nach Anspruch 2 oder 3, wobei eine Dicke des Kerbenabschnitts (153b, 453b) weniger als eine Dicke des Dislokationsabschnitts ist.

5. Kappenanordnung nach Anspruch 2, wobei es mindestens einen Dislokationsabschnitt (153a, 453a) und mindestens einen Kerbenabschnitt (153b, 453b) gibt; und
wenn es eine Mehrzahl von Dislokationsabschnitten und eine Mehrzahl von Kerbenabschnitten gibt, die Mehrzahl von Dislokationsabschnitten voneinander getrennt gebildet sind, und jeder der Mehrzahl von Kerbenabschnitten in einem Grenzbereich jedes der Mehrzahl von Dislokationsabschnitten gebildet ist, um einen Bereich jedes der Mehrzahl von Dislokationsabschnitten zu definieren.

6. Kappenanordnung nach Anspruch 2, wobei der Dislokationsabschnitt (153a, 453a) und der Kerbenabschnitt (153b, 453b) kreisförmig sind.

7. Kappenanordnung nach Anspruch 1, wobei die Kappenunterseite (252, 352) einen Dislokationsabschnitt (253, 353) umfasst, der in mindestens einem Abschnitt der Kappenunterseite gebildet ist und, wenn der externe Druck zunimmt, durch Brechen geöffnet wird.

8. Kappenanordnung nach Anspruch 7, wobei eine Dicke des Dislokationsabschnitts (253, 353) weniger ist als eine Dicke des Rests der Kappenunterseite (152, 252), in dem der Dislokationsabschnitt nicht gebildet ist.

9. Kappenanordnung nach Anspruch 7 oder 8, wobei es eine Mehrzahl von Dislokationsabschnitten (253, 353) gibt und die Mehrzahl von Dislokationsabschnitten voneinander getrennt gebildet sind.

10. Kappenanordnung nach Anspruch 5 oder 9, wobei die Mehrzahl von Dislokationsabschnitten (153a, 253) identische Winkel auf Basis einer Mitte der Kappenunterseite (152, 252) bilden; oder wobei die Mehrzahl von Dislokationsabschnitten von dem gleichen Radius auf Basis einer Mitte der Kappenunterseite gebildet sind.

11. Kappenanordnung nach Anspruch 7, wobei der Dislokationsabschnitt (253, 353) in einem Kreis gebildet ist.

12. Kappenanordnung nach einem der vorhergehenden Ansprüche, wobei sich eine Kante des Entlüftungsabschnitts (154) hin zur Außenseite erstreckt und gebogen ist, um eine Kante eines oberen Abschnitts der Kappenoberseite (160) abzudecken und/oder wobei eine Öffnung in einer Mitte der Kappenunterseite gebildet ist, und die Kappenanordnung ferner eine Unterlegscheibe (158) umfasst, die die Öffnung der Kappenunterseite (152) abdeckt, und/oder ferner eine Unterlegscheibe (358) umfasst, die integral mit der Kappenunterseite (352) gebildet ist.

13. Kappenanordnung nach einem der vorhergehenden Ansprüche, ferner umfassend einen Isolator (156, 256, 356, 456), der zwischen dem Entlüftungsabschnitt (154, 254, 354, 454) und der Kappenunterseite (152, 252, 352, 452) gebildet ist, um den Entlüftungsabschnitt zu stützen.

14. Kappenanordnung nach Anspruch 13, wobei der Isolator (456) eine Außenkante mindestens einer bzw. eines der Kappenunterseite (452), des Entlüftungsabschnitts (454) und der Kappenoberseite (460) abdeckt, und/oder die Kappenanordnung ferner eine Abdeckplatte (480) umfasst, die gebildet ist, um den Isolator (456) abzudecken, und ein Fluidloch (481) umfasst, durch welches Gas in einer Richtung hin zu der Kappenoberseite strömt.

15. Kappenanordnung nach Anspruch 14, wobei, wenn die Kappenanordnung die Abdeckplatte umfasst, eine Fläche des Fluidlochs (481) der Abdeckplatte 10 mm² oder weniger ist.

16. Kappenanordnung nach einem der Ansprüche 13 bis 15, wobei die Kappenunterseite umfasst:
eine untere Platte (152b, 252b, 352b, 452b);
eine obere Platte (152a, 252a, 352a, 452a), die angeordnet ist, um von der unteren Platte beabstandet zu sein; und
eine Mehrzahl von Brückenabschnitten (152c, 252c, 352c, 452c), die die obere Platte und die untere Platte verbinden,
und wobei Räume zwischen benachbarten Brückenabschnitten durch den Isolator (156, 256, 356, 456) abgedichtet sind.

17. Sekundäre Batterie (300, 400) umfassend:
eine Elektrodenanordnung (310, 410);
eine Dose (340, 440), in der die Elektrodenanordnung enthalten ist; und
eine Kappenanordnung (370, 470) nach einem der vorhergehenden Ansprüche, wobei der externe Druck von dem internen Druck in der Dose bereitgestellt wird.

## Revendications

1. Ensemble capuchon comprenant :
un capuchon bas (152, 252, 352, 452) agencé de manière qu'au moins une de ses parties se fracture afin de former une ouverture lorsqu'une pression externe est appliquée sur elle ;
une partie évent (154, 254, 354, 454) agencée de manière qu'au moins une de ses parties soit ouverte lorsqu'une pression externe est appliquée sur elle ; et
un capuchon haut (160, 360, 460) relié électriquement à la partie évent,
la partie évent étant entièrement espacée du capuchon bas.

2. Ensemble capuchon selon la revendication 1, dans lequel le capuchon bas (152, 452) comprend :
une partie de dislocation (153a, 453a) agencée pour s'ouvrir lorsqu'une pression externe est appliquée sur elle ; et
une partie encoche (153b, 453b) dans une région limite de la partie de dislocation définissant la partie de dislocation et dans laquelle une fracture est agencée pour se produire lorsqu'une pression externe est appliquée sur elle.

3. Ensemble capuchon selon la revendication 2, dans lequel le capuchon bas (152) comprend, en outre, une partie support (153c) formée dans la partie encoche et supportant la partie de dislocation (153a) en raccordant la partie de dislocation avec une autre région du capuchon bas.

4. Ensemble capuchon selon la revendication 2 ou 3, dans lequel une épaisseur de la partie encoche (153b, 453b) est inférieure à une épaisseur de la partie de dislocation.

5. Ensemble capuchon selon la revendication 2, dans lequel il existe au moins une partie de dislocation (153a, 453a) et au moins une partie encoche (153b, 453b) ; et
lorsqu'il existe une pluralité de parties de dislocation et une pluralité de parties encoches, la pluralité de parties de dislocation sont formées distinctes les unes des autres, et chaque partie encoche de la pluralité de parties encoches est formée dans une région limite de chacune de la pluralité de parties de dislocation afin de définir une région de chacune de la pluralité de parties de dislocation.

6. Ensemble capuchon selon la revendication 2, dans lequel la partie de dislocation (153a, 453a) et la partie encoche (153b, 453b) sont circulaires.

7. Ensemble capuchon selon la revendication 1, dans lequel le capuchon bas (252, 352) comprend une partie de dislocation (253, 353) formée dans au moins une partie du capuchon bas et ouverte en étant fracturée lorsque la pression externe augmente.

8. Ensemble capuchon selon la revendication 7, dans lequel une épaisseur de la partie de dislocation (253, 353) est inférieure à une épaisseur du reste du capuchon bas (152, 252) dans lequel la partie de dislocation n'est pas formée ;

9. Ensemble capuchon selon la revendication 7 ou 8, dans lequel il existe une pluralité de parties de dislocation (253, 353) et la pluralité de parties de dislocation sont formées distinctes les unes des autres.

10. Ensemble capuchon selon la revendication 5 ou 9, dans lequel la pluralité de parties de dislocation (153a, 253) forment des angles identiques sur la base d'un centre du capuchon bas (152, 252) ; ou dans lequel la pluralité de parties de dislocation sont dotées du même rayon sur la base d'un centre du capuchon bas.

11. Ensemble capuchon selon la revendication 7, dans lequel la partie de dislocation (353, 253) est formée en un cercle.

12. Ensemble capuchon selon l'une quelconque des revendications précédentes, dans lequel un bord de la partie évent (154) s'étend vers l'extérieur et est recourbé pour couvrir un bord d'une partie supérieure du capuchon haut (160) et/ou une ouverture étant formée dans un centre du capuchon bas, et l'ensemble capuchon comprend, en outre, un sous-disque (158) couvrant l'ouverture du capuchon bas (152) et/ou comprenant, en outre, un sous-disque (358) formé d'un seul tenant avec le capuchon bas (352).

13. Ensemble capuchon selon l'une quelconque des revendications précédentes, comprenant, en outre un isolant (156, 256, 356, 456) formé entre la partie évent (154, 254, 354, 454) et le capuchon bas (152, 252, 352, 452) pour supporter la partie évent.

14. Ensemble capuchon selon la revendication 13, dans lequel l'isolant (456) couvre un bord extérieur d'au moins un des éléments parmi le capuchon bas (452), la partie évent (454), et le capuchon haut (460), et/ou l'ensemble capuchon comprend, en outre, une plaque de couverture (480) formée pour couvrir l'isolant (456) et comprenant un orifice à fluide (481) par lequel un gaz s'écoule dans une direction vers le capuchon haut.

15. Ensemble capuchon selon la revendication 14, dans lequel si l'ensemble capuchon comprend la plaque de couverture, une zone de l'orifice à fluide (481) de la plaque de couverture est inférieure ou égale à 10 mm².

16. Ensemble capuchon selon l'une quelconque des revendications 13 à 15, dans lequel le capuchon bas comprend :
une plaque inférieure (152b, 252b, 352b, 452b) ;
une plaque supérieure (152a, 252a, 352a, 452a), disposée de manière à être espacée de la plaque inférieure ; et
une pluralité de parties formant ponts (152c, 252c, 352c, 452c) reliant la plaque supérieure et la plaque inférieure,
et des espaces entre des parties formant ponts adjacentes étant obturées par l'isolant (156, 256, 356, 456) .

17. Batterie secondaire (300, 400) comprenant :
un ensemble d'électrodes (310 ; 410) ;
un réservoir (340, 440) contenant l'ensemble d'électrodes ; et
un ensemble capuchon (370, 470) selon l'une quelconque des revendications précédentes, la pression externe étant fournie par la pression interne dans le réservoir.
